# EUROPÄISCHE PATENTSCHRIFT

(11) **EP 2 342 118 B1**
(45) Veröffentlichungstag und Bekanntmachung des Hinweises auf die Patenterteilung: **20.11.2013**
(21) Anmeldenummer: 09783945.0
(22) Anmeldetag: 12.10.2009
(51) Int. Cl.: B62D 5/06, F04C 14/26

(54) **HYDRAULISCHE SERVOLENKUNG**
HYDRAULIC POWER STEERING SYSTEM
DIRECTION ASSISTÉE HYDRAULIQUE

(30) Priorität: 29.10.2008 DE 102008043246
(43) Veröffentlichungstag der Anmeldung: 13.07.2011
(73) Patentinhaber: ZF-Lenksysteme GmbH, 73527 Schwäbisch Gmünd (DE)
(72) Erfinder: MERZ, Johann, 73527 Schwäbisch Gmünd (DE)
(86) Internationale Anmeldenummer: PCT/EP2009/063265
(87) Internationale Veröffentlichungsnummer: WO 2010/049262

(56) Entgegenhaltungen:
- EP-A1- 1 013 535
- EP-A1- 1 234 748
- WO-A2-2004/088192
- DE-A1-102006 002 959
- DE-C1- 19 745 448

## Beschreibung

Die Erfindung betrifft eine hydraulische Servolenkung für ein Fahrzeug mit einer Pumpe zum Fördern von Druckmittel aus einem Druckmittelbehälter zu einem Verbraucher gemäß dem Oberbegriff von Anspruch 1. Die Erfindung betrifft außerdem eine Verdrängerpumpe zum Fördern von Druckmittel gemäß dem Oberbegriff von Anspruch 7.

Hydraulische Servolenkungen für Fahrzeuge sind aus dem allgemeinen Stand der Technik hinlänglich bekannt, wozu beispielsweise auf die DE 10 2006 002 959 A1 verwiesen wird, welche ein Hydrauliksystem mit einer volumenstromgeregelten Pumpe für ein Kraftfahrzeug zeigt.

Eine gattungsgemäße hydraulische Servolenkung für ein Fahrzeug und eine gattungsgemäße Verdrängerpumpe sind aus der DE 197 45 448 C1 bekannt.

Hydraulische Servolenkungen für Fahrzeuge insbesondere für Kraft- und Nutzfahrzeuge, benötigen für eine gute Funktion einen konstanten Druckmittelstrom. Der Druckmittelstrom wird dabei in der Regel mit einer motorgetriebenen Pumpe erzeugt, wobei es sich bei dem Motor im Regelfall um einen Verbrennungsmotor handelt, der mit variabler Drehzahl arbeitet. Um den Druckmittelstrom konstant zu halten, haben derartige Pumpen eine Regeleinrichtung, die entweder als Bypass-Regelung oder als Hubregelung arbeitet. Der Druckmittelstrom wird dabei mit einer Drossel bzw. Blende gemessen. Der Differenzdruck an der Drossel bzw. Blende ist ein Maß für den Volumenstrom zu dem Verbraucher.

Generell nachteilig bei einer Pumpe, die von einem Motor mit variabler Drehzahl angetrieben wird, ist die hohe Leistungsaufnahme einer derartigen Vorrichtung selbst dann, wenn keine Lenkaktion stattfindet. Um die hohe Leistungsaufnahme zu senken, wenn keine Lenkaktion stattfindet, sind aus dem allgemeinen Stand der Technik elektrisch angesteuerte Regelblenden bekannt. Der Nachteil derartiger Regelblenden besteht darin, dass diese teuer sind, da ein Proportionalventil, eine ECU (elektronische Steuereinheit) und Sensoren notwendig sind.

Eine hierzu alternative Möglichkeit ist es, die Regelblende druckabhängig variabel zu verändern. Allgemein gilt, dass sich ein Druck an der Regelblende dann erhöht, wenn eine Lenkaktion durchgeführt wird. Wenn keine Lenkaktion durchgeführt wird, liegt im Allgemeinen der Durchlaufdruck an. Eine druckabhängige variable Regelblende ist in der DE 197 45 448 C1 offenbart.

Die gattungsgemäße Schrift zeigt eine Verdrängerpumpe zum Fördern von Druckmittel aus einem Druckmittelbehälter zu einem Verbraucher, insbesondere einer Hilfskraftlenkung für Kraftfahrzeuge. Im Inneren eines Gehäuses ist ein Pumpenpaket, bestehend aus einem Rotor, einem Kurvenring und mehreren Arbeitsschiebern, eingesetzt. Die Arbeitsschieber können beispielsweise als Flügel einer Flügelzellenpumpe oder als Rollen einer Rollenzellenpumpe ausgebildet sein. Zwischen dem Kurvenring und dem Rotor sind Arbeitskammern gebildet, die durch die Arbeitsschieber unterteilt und die in axialer Richtung durch Steuerplatten begrenzt sind. Ein Bypass-Stromregelventil dient zur Regelung eines Volumenstroms zu dem Verbraucher. Eine Drossel des Bypass-Stromregelventils ist durch eine Blende gebildet, die eine veränderbare offene Querschnittsfläche aufweist. Die offene Querschnittsfläche der Blende verändert sich in Abhängigkeit von der Verschiebung eines gegen die Kraft einer Feder verschiebbaren Kolbens. Die offene Querschnittsfläche der Blende vergrößert sich bei ansteigendem, an der Blende anstehendem Druck. Dies erfolgt dadurch, dass der Kolben durch einen an der Blende anstehenden Druck ausschließlich gegen die Kraft der Feder verschiebbar ist.

Die in der DE 197 45 448 C1 offenbarte Verdrängerpumpe ermöglicht bei einem Druckanstieg sehr schnell einen höheren Abregelstrom.

Der Nachteil der in der DE 197 45 448 C1 beschriebenen Lösung besteht darin, dass diese relativ aufwändig ist, da zusätzlich ein Kolben, eine Feder und eine entsprechende Bearbeitung im Pumpengehäuse notwendig ist.

Der vorliegenden Erfindung liegt die Aufgabe zugrunde, die Nachteile des Standes der Technik zu lösen, insbesondere eine hydraulische Servolenkung für ein Fahrzeug zu schaffen, bei der in einfacher und kostengünstiger Weise die Leistungsaufnahme einer Pumpe zum Fördern von Druckmittel verbessert werden kann.

Der vorliegenden Erfindung liegt auch die Aufgabe zugrunde, eine Verdrängerpumpe zum Fördern von Druckmittel, insbesondere zur Versorgung einer Hilfskraftlenkung eines Kraftfahrzeugs zu schaffen, die einfach und kostengünstig herstellbar ist und bei der die Leistungsaufnahme verbessert ist.

Die Aufgabe wird hinsichtlich einer hydraulischen Servolenkung für ein Fahrzeug durch Anspruch 1 gelöst. Ferner wird die Aufgabe hinsichtlich einer zu schaffenden Verdrängerpumpe durch Anspruch 7 gelöst.

Dadurch, dass die erfindungsgemäße Lösung vorsieht, dass die in dem Druckmittelstrom von der Pumpe zu dem Verbraucher angeordnete Blende wenigstens in einem die offene Querschnittsfläche beeinflussbaren Durchlassbereich aus einem flexiblen und/oder kompressiblen Material gebildet ist, welches bei ansteigendem Druck an der Blende seine Form derart verändert, dass sich die offene Querschnittsfläche vergrößert, wird mit einfachen und kostengünstigen Mitteln erreicht, dass bei steigendem Druck eine Abregelung später erfolgt, da die für die Abregelung maßgebliche Druckdifferenz (vor und hinter der Blende) später erreicht wird. Es wird erfindungsgemäß mit einfachen Mitteln eine hydraulische Servolenkung für ein Fahrzeug bzw. eine Verdrängerpumpe geschaffen, bei der eine Regelung auf einen höheren Abregelstrom bei einem Druckanstieg sehr schnell erfolgt. D. h. der Differenzdruck, ab dem die Regeleinrichtung den Volumenstrom zu dem Verbraucher reduziert, wird bei hohem Druck, d. h. bei Durchführung einer Lenkaktion später erreicht, da bei hohem Druck die offene Querschnittsfläche vergrößert ist. Die Regeleinrichtung zur Regelung des Volumenstroms zum Verbraucher kann beispielsweise als Hubregelung oder als Bypass-Regelung ausgebildet sein. Die Regelung kann dabei auch bereits bei kleineren Drehzahlen eintreten.

Die erfindungsgemäße Lösung lässt sich einfach und kostengünstig realisieren. Es ist im wesentlichen lediglich notwendig, die bisher vorhandene starre Blende gegen eine verformbare bzw. flexible und/oder kompressible Blende auszutauschen. Eine Verbindung zur Atmosphäre oder zur Saugseite ist nicht notwendig.

Von Vorteil ist es, dass die Kompressibilität durch Luftkammern bzw. Lufträume erreicht wird, die als Rückzugsräume zur Verfügung stehen, in die die Blende bzw. zumindest die Teile der Blende, die die offene Querschnittsfläche definieren, bei einem Ansteigen des Drucks zurückweichen können.

Die offene Querschnittsfläche der Blende ist durch einen aus dem flexiblen und/oder kompressiblen Material gebildeten Vorsprung definiert. Vorzugsweise kann es sich bei dem Vorsprung um einen verformbaren Wulst handeln, der wiederum vorzugsweise ringförmig umlaufend ausgebildet ist. Von Vorteil ist es, dass an der von der offenen Querschnittsfläche abgewandten Rückseite des Vorsprungs ein Luftraum, vorzugsweise ringförmig umlaufend, ausgebildet ist, in welchen der Vorsprung bei ansteigendem, an der Blende anstehendem Druck zurückweichen kann.

Erfindungsgemäß ist unter einem flexiblen und/oder kompressiblen Material, welches bei einem ansteigenden Druck an der Blende seine Form verändert, zu verstehen, dass diese Formänderung innerhalb der Drücke eintritt, die üblicherweise bei hydraulischen Servolenkungen herrschen. Dabei kann erfindungsgemäße durchaus vorgesehen sein, dass eine Verformung des Materials bzw. der Blende erst dann auftritt, wenn ein gewisses Druckniveau erreicht wird. Dies kann durch die Wahl eines geeigneten Materials erreicht werden.

Die Verformung kann kontinuierlich oder sprunghaft erfolgen.

Erfindungsgemäß kann vorgesehen sein, dass die Verformung innerhalb des üblicherweise in einem hydraulischen Lenksystem auftretenden Drucks bis zum Erreichen des Maximaldrucks erfolgt. Alternativ dazu kann jedoch auch vorgesehen sein, dass das Material bereits bei einem definierten Druckniveau vor Erreichen des Maximaldrucks derart verformt ist, dass sich eine maximale offene Querschnittsfläche ergibt.

Vorteilhafte Ausgestaltungen und Weiterbildungen der Erfindung ergeben sich aus den weiteren abhängigen Ansprüchen.

Nachfolgend ist ein Ausführungsbeispiel der Erfindung anhand der Zeichnung prinzipmäßig dargestellt.

Es zeigt:
Fig. 1 eine Prinzipdarstellung einer hydraulischen Servolenkung für ein Fahrzeug mit einer Pumpe zum Fördern von Druckmittel aus einem Druckmittelbehälter zu einem Verbraucher der hydraulischen Servolenkung;
Fig. 2 eine Darstellung der erfindungsgemäßen Blende, die in einer Leitung von der Pumpe zu einem Verbraucher angeordnet ist;
Fig. 3 ein Diagramm der Leistungsaufnahme bzw. des Volumenstroms zu einem Verbraucher in Abhängigkeit der Drehzahl bei hohem und bei niederem Druck; und
Fig. 4 einen Längsschnitt durch eine Verdrängerpumpe mit der erfindungsgemäßen Blende.

Hydraulische Servolenkungen für ein Fahrzeug sind aus dem allgemeinen Stand der Technik hinlänglich bekannt, wozu beispielsweise auf die DE 10 2006 002 959 A1 und die DE 197 45 448 C1 verwiesen wird, weshalb hierauf nachfolgend nicht näher eingegangen wird. Aus dem allgemeinen Stand der Technik sind auch Verdrängerpumpen, insbesondere zum Fördern von Druckmittel zur Versorgung einer hydraulischen Servolenkung, insbesondere einer Hilfskraftlenkung für Kraftfahrzeuge hinlänglich bekannt, weshalb auch hierauf nicht näher eingegangen wird. Nachfolgend sind lediglich die für die erfindungsgemäße Lösung relevanten Merkmale näher dargestellt.

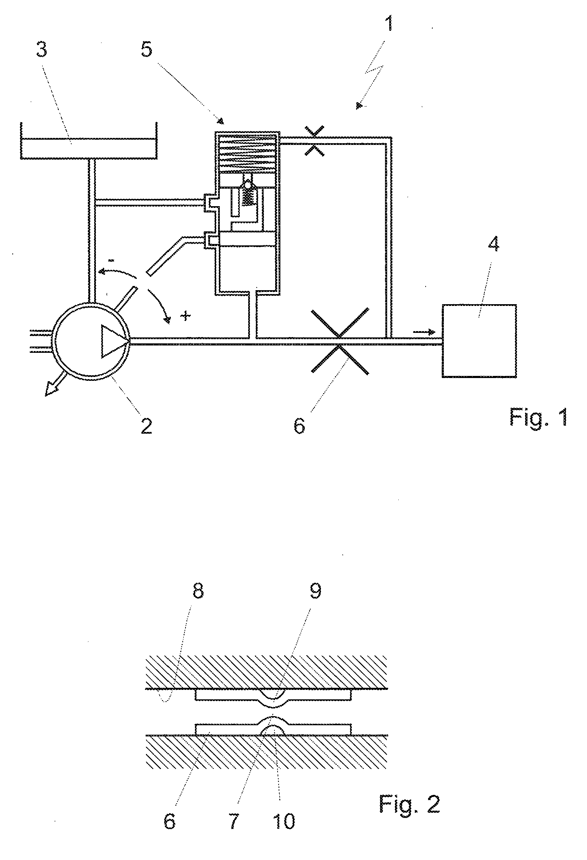

Fig. 1 zeigt einen Ausschnitt einer hydraulischen Servolenkung 1 für ein Fahrzeug. Dargestellt ist dabei eine Pumpe 2 zum Fördern von Druckmittel aus einem Druckmittelbehälter 3 zu einem Verbraucher 4. Bei dem Druckmittel handelt es sich im Ausführungsbeispiel um Öl. Bei der Pumpe 2 handelt es sich im Ausführungsbeispiel um eine hubgeregelte Verdrängerpumpe 2. Bei dem Verbraucher 4 kann es sich um einen beliebigen Verbraucher der hydraulischen Servolenkung, beispielsweise um einen Hydraulikzylinder, handeln, welcher über Spurstangen und andere mechanische Teile die zu lenkenden Räder auslenkt.

Der für die hydraulische Servolenkung notwendige Hydraulikkreislauf ist in Fig. 1 nur so weit dargestellt, als dies zum Verständnis der vorliegenden Erfindung notwendig ist.

Die Verdrängerpumpe 2 ist drehzahlabhängig von einem nicht näher dargestellten Fahrzeugmotor angetrieben. Dies bedeutet, dass sich die Verdrängerpumpe 2 in Abhängigkeit der Drehzahl des Fahrzeugmotors schneller oder langsamer dreht und sich entsprechend auch die von der Verdrängerpumpe 2 geförderte Menge an Öl verändert.

Wie sich aus Fig. 1 ferner ergibt, ist eine Regeleinrichtung 5 zur Regelung eines Volumenstroms zu dem Verbraucher 4 vorgesehen. Im Ausführungsbeispiel ist die Regeleinrichtung 5 als Hubversteller ausgebildet. Derartige Regeleinrichtungen 5 und deren Integration in ein Hydrauliksystem, insbesondere in das Hydrauliksystem einer hydraulischen Servolenkung 1 bzw. der Integration innerhalb einer Verdrängerpumpe 2, sind aus dem allgemeinen Stand der Technik hinlänglich bekannt, weshalb dies nachfolgend nicht näher dargestellt wird. Durch das Öffnen und Schließen der Regeleinrichtung 5 wird ein Ölstrom zur Betätigung einer Stelleinrichtung in der Verdrängerpumpe 2 erzeugt. Die Stelleinrichtung ist in Fig. 1 durch die +/- Pfeile dargestellt. Bedingt durch den von der Regeleinrichtung 5 erzeugten Ölstrom, derdurch den Differenzdruck an der Blende 6 bestimmt wird, erhöht oder senkt die Stelleinrichtung den Volumenstrom zum Verbraucher. Die Regeleinrichtung 5 beeinflusst bzw. steuert somit im Ausführungsbeispiel einen Hubversteller der Verdrängerpumpe 2. Die Regeleinrichtung 5 kann in nicht näher beschriebener Weise mit einem Überdruckventil versehen sein.

Das Steuern des Hubverstellers erfolgt im wesentlichen in Abhängigkeit einer Druckdifferenz an einer Blende 6. Eine derartige Blende 6 ist in Fig. 1 prinzipmäßig dargestellt.

Die Blende 6 ist in dem Druckmittelstrom von der Verdrängerpumpe 2 zu dem Verbraucher 4 angeordnet. Dabei ist erfindungsgemäß vorgesehen, dass die Blende 6 eine veränderbare offene Querschnittsfläche 7 aufweist, wobei sich die offene Querschnittsfläche 7 bei ansteigendem, an der Blende 6 anstehendem Druck vergrößert. Dabei ist der Druck gemeint, der an der der Verdrängerpumpe 2 zugewandten Seite an der Blende 6 anliegt.

Erfindungsgemäß wird eine Veränderung der offenen Querschnittsfläche 7 bei ansteigendem Druck dadurch erreicht, dass die Blende 6 wenigstens in einem die offene Querschnittsfläche 7 beeinflussbaren Durchiassbereich aus einem flexiblen und/oder kompressiblen Material gebildet ist. Im Ausführungsbeispiel ist vorgesehen, dass die gesamte Blende 6 aus einem flexiblen und/oder kompressiblen Material gebildet ist.

Durch das flexible und/oder kompressible Material wird erreicht, dass die Blende 6 bei einem ansteigenden Druck ihre Form derart verändert, dass sich die offene Querschnittsfläche 7 vergrößert. Die Verformung soll dabei derart erfolgen, dass sich die offene Querschnittsfläche 7 so verändert, dass sich eine signifikante Änderung des Abregelstroms bei einem Druckanstieg an der Blende 6 ergibt.

Eine vorteilhafte Ausführungsform der Blende 6 ist in Fig. 2 dargestellt. Fig. 2 zeigt eine Leitung 8, die von der Verdrängerpumpe 2 zu einem Verbraucher 4 führt. Die Blende 6 kann dabei so in der hydraulischen Servolenkung 1 integriert sein, wie dies in Fig. 1 dargestellt ist.

Wie sich aus Fig. 2 ergibt, ist die offene Querschnittsfläche 7 der Blende 6 durch einen aus dem flexiblen und/oder kompressiblen Material gebildeten Vorsprung 9 definiert. Dabei ist an der von der offenen Querschnittsfläche 7 abgewandten Rückseite des Vorsprungs 9 ein Luftraum 10 ausgebildet. In den Luftraum 10 kann der Vorsprung 9 bzw. wenigstens Teile des Vorsprungs 9 bei einem ansteigenden, an der Blende 6 anstehenden Druck zurückweichen.

Im Ausführungsbeispiel gemäß Fig. 2 ist der Vorsprung 9 der Blende 6 durch eine nach innen gewölbte verformbare Wulst 9 ausgebildet. Dabei ist an der von der offenen Querschnittsfläche 7 abgewandten Rückseite der Wulst 9 ein ringförmiger Luftraum 10 ausgebildet. Der ringförmige Luftraum 10 kann dabei ununterbrochen ausgebildet sein oder durch Stege, Zwischenwände oder dergleichen unterbrochen sein. Durch derartige Stege oder Zwischenwände sowie durch die Wandstärke der Wulst 9 kann auf die Verformung der Wulst 9 und somit auf die Veränderung der offenen Querschnittsfläche 7 Einfluss genommen werden.

Ein Vorteil der in Fig. 2 dargestellten Lösung mit der verformbaren Wulst 9 besteht darin, dass durch die Wulst 9 ohne weitere Maßnahmen automatisch ein Luftraum 10 ausgebildet ist, der auf der einen Seite durch die Wulst 9 und auf der anderen Seite durch die Leitung 8 begrenzt ist. Eine Blende 6 mit einer nach innen gewölbten Wulst 9 lässt sich einerseits einfach und kostengünstig herstellen und andererseits problemlos in eine Leitung 8 integrieren.

Wie sich aus Fig. 2 ergibt, ist in Strömungsrichtung vor und nach der Wulst 9 durch die Blende 6 ein Kanalstück ausgebildet, welches sich vorzugsweise bündig an die Innenwand der Leitung 8 anlegt.

Alternativ oder ergänzend zu der in Fig. 2 dargestellten Lösung mit dem Luftraum 10 kann auch vorgesehen sein, dass die Blende 6 vollständig oder wenigstens in dem Durchlassbereich, durch welchen die offene Querschnittsfläche 7 definiert wird, aus einem porösen Material gebildet ist.

Des weiteren kann ergänzend oder alternativ vorgesehen sein, dass die Blende 6 vollständig oder wenigstens in dem die Querschnittsfläche 7 definierenden Durchlassbereich Luftkammern aufweist und/oder einen oder mehrere (weitere) Lufträume 10 ausbildet.

Zur Realisierung der erfindungsgemäßen Lösung eignet sich grundsätzlich jedes Material, das kompressibel oder flexibel innerhalb der Drücke verformbar ist, welche innerhalb eines hydraulischen Systems einer hydraulischen Servolenkung herrschen bzw. die bei Verdrängerpumpen herrschen, die bei hydraulischen Servolenkungen 1 eingesetzt werden. Vorzugsweise können als Material Gummi, gummiartige Elastomere oder durch Vulkanisierung unter Ausbildung von Hohlräumen zusammengesetzte Gummielemente verwendet werden.

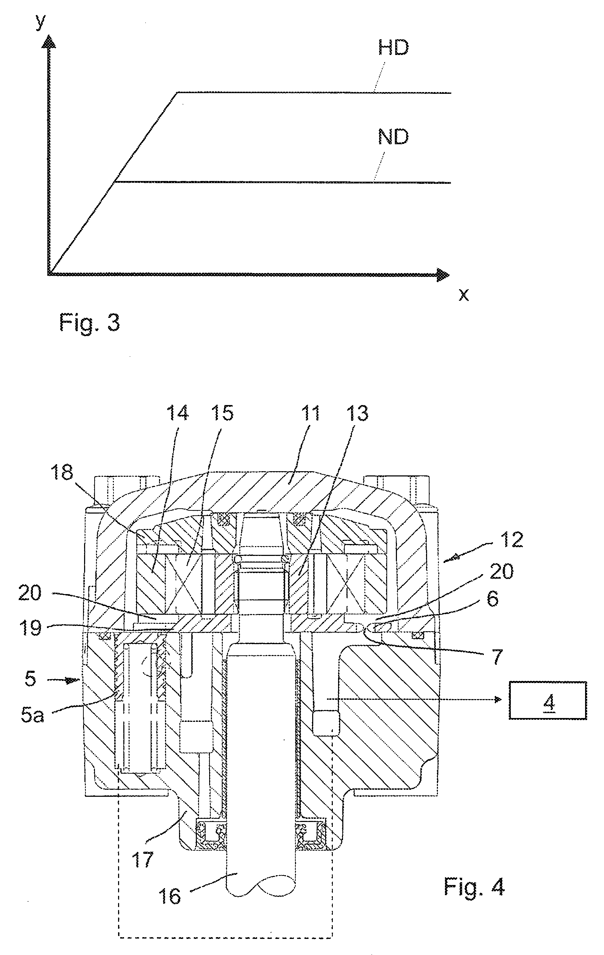

Fig. 3 zeigt ein Diagramm der Leistungsaufnahme bzw. des Volumenstroms in Abhängigkeit der Drehzahl der Verdrängerpumpe 2. Dabei bezeichnet die x-Achse die Drehzahl, die y-Achse den Volumenstrom, ND den Verlauf bei niedrigem Druck und HD den Verlauf bei hohem Druck.

Bei Lenksystemen entsteht durch den Volumenstrom, den die Pumpe fördert, ein Durchlaufdruck in den Leitungen. Dieser Durchlaufdruck lässt sich durch die erfindungsgemäße Lösung absenken, insbesondere dann, wenn keine Lenkbewegung durchgeführt wird. Dadurch wird die Leistungsaufnahme der Pumpe abgesenkt.

Fig. 4 zeigt prinzipmäßig eine Verdrängerpumpe 2 zum Fördern von Druckmittel aus dem Druckmittelbehälter 3 zu dem Verbraucher 4. Bei dem Verbraucher 4 kann es sich beispielsweise um eine hydraulische Servolenkung 1 bzw. Teile davon, insbesondere auch um eine Hilfskraftlenkung für ein Kraftfahrzeug, handeln. Die in Fig. 4 dargestellte Verdrängerpumpe 2 weist ein Pumpengehäuse 11 auf, in welches ein Pumpenpaket 12 eingesetzt ist. Das Pumpenpaket 12 weist dabei wenigstens einen Rotor 13, einen Kurvenring 14 und Arbeitsschieber 15 auf. Der Rotor 13 ist über eine Antriebswelle 16 in einem Lagergehäuse 17 gelagert. Die Antriebswelle 16 wird über einen nicht näher dargestellten Fahrzeugmotor drehzahlabhängig angetrieben.

Zwischen den Arbeitsschiebern 15 und dem Kurvenring 14 sind nicht dargestellte Arbeitskammern in der Form von Verdrängerzellen gebildet, die an ihren beiden axialen Seiten von zwei Steuerplatten 18, 19 begrenzt sind. In den Steuerplatten 18, 19 sind in bekannter Weise Drucköffnungen 20 und nicht dargestellte Saugöffnungen vorgesehen.

Ferner ist in bekannter Weise in dem Pumpengehäuse 11 eine Regeleinrichtung 5 zur Regelung eines Volumenstroms zu dem Verbraucher 4 angeordnet. Die Regeleinrichtung kann im Ausführungsbeispiel als Bypass-Stromregelventil 5 ausgebildet sein. Das Bypass-Stromregelventil 5 weist in bekannter Weise einen Kolben 5a zur Regelung des Volumenstroms zu dem Verbraucher 4 auf. Ferner ist eine Blende 6 mit einer erfindungsgemäßen veränderbaren offenen Querschnittsfläche 7 angeordnet. In bereits beschriebener Weise verändert sich die offene Querschnittsfläche 7 bei ansteigendem, an der Blende 6 anstehenden Druck derart, dass sich diese vergrößert.

Die Ausbildung der in Fig. 4 lediglich prinzipmäßig dargestellten Blende 6 kann beispielsweise in der Art erfolgen, wie dies in Fig. 2 dargestellt ist, möglich sind auch alle anderen, im Rahmen der Erfindung beschriebenen Lösungen, bei der die Blende 6 bzw. wenigstens der Durchlassbereich, der die offene Querschnittsfläche 7 beeinflusst, aus einem flexiblen und/oder kompressiblen Material gebildet ist, welches bei einem ansteigenden Druck an der Blende 6 seine Form derart verändert, dass sich die offene Querschnittsfläche 7 vergrößert.

### Bezugszeichenliste

- 1: hydraulische Servolenkung
- 2: Pumpe
- 3: Druckmittelbehälter
- 4: Verbraucher
- 5: Regeleinrichtung
- 5a: Kolben
- 6: Blende
- 7: offene Querschnittsfläche
- 8: Leitung
- 9: Vorsprung
- 10: Luftraum
- 11: Pumpengehäuse
- 12: Pumpenpaket
- 13: Rotor
- 14: Kurvenring
- 15: Arbeitsschieber
- 16: Antriebswelle
- 17: Lagergehäuse
- 18: Steuerplatte
- 19: Steuerplatte
- 20: Drucköffnungen

## Patentansprüche

1. Hydraulische Servolenkung (1) für ein Fahrzeug, mit einer Pumpe (2) zum Fördern von Druckmittel aus einem Druckmittelbehälter (3) zu einem Verbraucher (4), wobei die Pumpe (2) drehzahlabhängig von einem Fahrzeugmotor angetrieben ist, mit einer Regeleinrichtung (5) zur Regelung eines Volumenstroms zu dem Verbraucher (4), und mit einer in dem Druckmittelstrom von der Pumpe (2) zu dem Verbraucher (4) angeordneten Blende (6) mit einer veränderbaren offenen Querschnittsfläche (7), wobei sich die offene Querschnittsfläche (7) bei ansteigendem, an der Blende (6) anstehendem Druck vergrößert, wobei die Blende (6) wenigstens in einem die offene Querschnittsfläche (7) beeinflussbaren Durchlassbereich aus einem flexiblen und/oder kompressiblen Material gebildet ist, welches bei ansteigendem Druck an der Blende (6) seine Form derart verändert, dass sich die offene Querschnittsfläche (7) vergrößert, **dadurch gekennzeichnet, dass**
■ die offene Querschnittsfläche (7) der Blende (6) durch einen aus dem flexiblen und/oder kompressiblen Material gebildeten Vorsprung (9) definiert ist,
■ die Blende (6) wenigstens in dem Durchlassbereich Luftkammern aufweist und/oder einen Luftraum (10) ausgebildet ist,
■ an der von der offenen Querschnittsfläche (7) abgewandten Rückseite des Vorsprungs (9) ein Luftraum (10) ausgebildet ist, in welchen der Vorsprung (9) wenigstens teilweise zurückweichen kann.

2. Hydraulische Servolenkung nach Anspruch 1, **dadurch gekennzeichnet, dass** die Blende (6) einen nach innen gewölbten Wulst aufweist, welcher den Vorsprung (9) ausbildet, wobei an der von der offenen Querschnittsfläche (7) abgewandten Rückseite der Wulst (9) ein ringförmiger Luftraum (10) ausgebildet ist.

3. Hydraulische Servolenkung nach einem der Ansprüche 1 bis 2, **dadurch gekennzeichnet, dass** die Blende (6) vollständig aus einem flexiblen und/oder kompressiblen Material gebildet ist.

4. Hydraulische Servolenkung nach einem der Ansprüche 1 bis 3, **dadurch gekennzeichnet, dass** die Pumpe eine Verdrängerpumpe (2) ist.

5. Hydraulische Servolenkung nach einem der Ansprüche 1 bis 4, **dadurch gekennzeichnet, dass** die Pumpe (2) eine hubgeregelte Pumpe ist und die Regeleinrichtung (5) einen Hubversteller der Pumpe (2) beeinflusst bzw. steuert.

6. Hydraulische Servolenkung nach einem der Ansprüche 1 bis 5, **dadurch gekennzeichnet, dass** die Regeleinrichtung eine Bypass-Regeleinrichtung (5) ist.

7. Verdrängerpumpe zum Fördern von Druckmittel aus einem Druckmittelbehälter zu einem Verbraucher (4), insbesondere einer Hilfskraftlenkung für Kraftfahrzeuge, mit folgenden Merkmalen:
■ ein in ein Pumpengehäuse (11) eingesetztes Pumpenpaket (12), wenigstens enthaltend einen Rotor (13), einen Kurvenring (14) und mehrere Arbeitsschieber (15), wobei zwischen dem Kurvenring (14) und dem Rotor (13) durch die Arbeitsschieber (15) unterteilte Arbeitskammern ausgebildet sind, die in axialer Richtung durch Steuerplatten (18,19) begrenzt sind;
■ eine Regeleinrichtung (5) zur Regelung eines Volumenstroms zu dem Verbraucher (4);
■ eine Blende (6), die eine veränderbare offene Querschnittsfläche (7) aufweist, wobei sich die offene Querschnittsfläche (7) bei ansteigendem, an der Blende (6) anstehendem Druck vergrößert,
■ die Blende (6) ist wenigstens in einem die offene Querschnittsfläche (7) beeinflussbaren Durchlassbereich aus einem flexiblen und/oder kompressiblen Material gebildet, welches bei ansteigendem Druck an der Blende (6) seine Form derart verändert, dass sich die offene Querschnittsfläche (7) vergrößert,
**dadurch gekennzeichnet, dass**
■ die offene Querschnittsfläche (7) der Blende (6) durch einen aus dem flexiblen und/oder kompressiblen Material gebildeten Vorsprung (9) definiert ist,
■ die Blende (6) wenigstens in dem Durchlassbereich Luftkammern aufweist und/oder einen Luftraum (10) ausgebildet ist,
■ an der von der offenen Querschnittsfläche (7) abgewandten Rückseite des Vorsprungs (9) ein Luftraum (10) ausgebildet ist, in welchen der Vorsprung (9) wenigstens teilweise zurückweichen kann.

## Claims

1. Hydraulic power steering system (1) for a vehicle, having a pump (2) for delivering pressure medium from a pressure medium tank (3) to a consumer (4), wherein the pump (2) is driven in a rotational-speed-dependent manner by a vehicle engine, having a regulating device (5) for regulating a volume flow to the consumer (4), and having an aperture (6) which is arranged in the pressure medium flow from the pump (2) to the consumer (4) and which has a variable open cross-sectional area (7), wherein the open cross-sectional area (7) increases in size with rising pressure prevailing at the aperture (6), wherein the aperture (6) is formed, at least in a passage region that can be influenced by the open cross-sectional area (7), from a flexible and/or compressible material which, when a pressure rises at the aperture (6), changes its shape such that the open cross-sectional area (7) increases in size,
**characterized in that**
• the open cross-sectional area (7) of the aperture (6) is defined by a projection (9) formed from the flexible and/or compressible material,
• the aperture (6) has air chambers at least in the passage region, and/or an air space (10) is formed,
• at the rear side, facing away from the open cross-sectional area (7), of the projection (9), there is formed an air space (10) into which the projection (9) can at least partially retreat.

2. Hydraulic power steering system according to Claim 1, **characterized in that** the aperture (6) has an inwardly bulged bead which forms the projection (9), wherein an annular air space (10) is formed at the rear side, facing away from the open cross-sectional area (7), of the bead (9).

3. Hydraulic power steering system according to either of Claims 1 and 2, **characterized in that** the aperture (6) is formed entirely from a flexible and/or compressible material.

4. Hydraulic power steering system according to one Claims 1 to 3, **characterized in that** the pump is a positive-displacement pump (2).

5. Hydraulic power steering system according to one of Claims 1 to 4, **characterized in that** the pump (2) is a stroke-regulated pump and the regulating device (5) influences or controls a stroke adjuster of the pump (2) .

6. Hydraulic power steering system according to one of Claims 1 to 5, **characterized in that** the regulating device is a bypass regulating device (5).

7. Positive-displacement pump for delivering pressure medium from a pressure medium tank to a consumer (4), in particular of a power steering system for motor vehicles, having the following features:
• a pump assembly (12) which is inserted into a pump housing (11) and which comprises at least a rotor (13), a cam ring (14) and multiple working slides (15), wherein, between the cam ring (14) and the rotor (13), working chambers are formed which are divided by the working slides (15) and which are delimited in an axial direction by control plates (18, 19);
• a regulating device (5) for regulating a volume flow to the consumer (4);
• an aperture (6) which has a variable open cross-sectional area (7), wherein the open cross-sectional area (7) increases in size with rising pressure prevailing at the aperture (6),
• the aperture (6) is formed, at least in a passage region that can be influenced by the open cross-sectional area (7), from a flexible and/or compressible material which, when a pressure rises at the aperture (6), changes its shape such that the open cross-sectional area (7) increases in size,
**characterized in that**
• the open cross-sectional area (7) of the aperture (6) is defined by a projection (9) formed from the flexible and/or compressible material,
• the aperture (6) has air chambers at least in the passage region, and/or an air space (10) is formed,
• at the rear side, facing away from the open cross-sectional area (7), of the projection (9), there is formed an air space (10) into which the projection (9) can at least partially retreat.

## Revendications

1. Direction assistée hydraulique (1) pour un véhicule, comprenant une pompe (2) pour refouler un fluide sous pression à partir d'un réservoir de fluide sous pression (3) jusqu'à un consommateur (4), la pompe (2) étant entraînée par un moteur du véhicule en fonction du régime, comprenant un dispositif de régulation (5) pour la régulation d'un flux volumique vers le consommateur (4), et comprenant un diaphragme (6) disposé dans le flux de fluide sous pression à partir de la pompe (2) jusqu'au consommateur (4), lequel diaphragme présente une surface en section transversale ouverte variable (7), la surface en section transversale ouverte (7) s'agrandissant lorsque la pression régnant au niveau du diaphragme (6) augmente, le diaphragme (6) étant formé à partir d'un matériau flexible et/ou compressible au moins dans une région de passage pouvant influencer la surface en section transversale ouverte (7), lequel matériau peut modifier sa forme lorsque la pression au niveau du diaphragme (6) augmente, de telle sorte que la surface en section transversale ouverte (7) s'agrandisse,
**caractérisée en ce que**
- la surface en section transversale ouverte (7) du diaphragme (6) est définie par une saillie (9) formée à partir du matériau flexible et/ou compressible,
- le diaphragme (6) comprend des chambres d'air au moins dans la région de passage et/ou un espace d'air (10) est réalisé,
- un espace d'air (10) est réalisé au niveau du côté arrière de la saillie (9) qui est opposé à la surface en section transversale ouverte (7), dans lequel espace d'air la saillie (9) peut reculer au moins partiellement.

2. Direction assistée hydraulique selon la revendication 1, **caractérisée en ce que** le diaphragme (6) comprend un bourrelet bombé vers l'intérieur, lequel bourrelet forme la saillie (9), un espace d'air annulaire (10) étant réalisé au niveau du côté arrière du bourrelet (9) qui est opposé à la surface en section transversale ouverte (7).

3. Direction assistée hydraulique selon l'une quelconque des revendications 1 et 2, **caractérisée en ce que** le diaphragme (6) est entièrement formé d'un matériau flexible et/ou compressible.

4. Direction assistée hydraulique selon l'une quelconque des revendications 1 à 3, **caractérisée en ce que** la pompe est une pompe volumétrique (2).

5. Direction assistée hydraulique selon l'une quelconque des revendications 1 à 4, **caractérisée en ce que** la pompe (2) est une pompe à course régulée et le dispositif de régulation (5) influence ou commande un dispositif de réglage de course de la pompe (2).

6. Direction assistée hydraulique selon l'une quelconque des revendications 1 à 5, **caractérisée en ce que** le dispositif de régulation est un dispositif de régulation à dérivation (5).

7. Pompe volumétrique pour refouler un fluide sous pression à partir d'un réservoir de fluide sous pression jusqu'à un consommateur (4), en particulier d'une direction assistée pour des véhicules automobiles, présentant les caractéristiques suivantes :
- un ensemble de pompe (12) inséré dans un carter de pompe (11), comportant au moins un rotor (13), un anneau à cames (14) et plusieurs tiroirs de travail (15), des chambres de travail divisées par les tiroirs de travail (15) étant réalisées entre l'anneau à cames (14) et le rotor (13), lesquelles sont limitées par des plaques de commande (18, 19) dans la direction axiale ;
- un dispositif de régulation (5) pour la régulation d'un flux volumique vers le consommateur (4) ;
- un diaphragme (6) qui présente une surface en section transversale ouverte variable (7), la surface en section transversale ouverte (7) s'agrandissant lorsque la pression régnant au niveau du diaphragme (6) augmente,
- le diaphragme (6) est formé à partir d'un matériau flexible et/ou compressible au moins dans une région de passage pouvant influencer la surface en section transversale ouverte (7), lequel matériau modifie sa forme lorsque la pression au niveau du diaphragme (6) augmente, de telle sorte que la surface en section transversale ouverte (7) s'agrandisse,
**caractérisée en ce que**
- la surface en section transversale ouverte (7) du diaphragme (6) est définie par une saillie (9) formée à partir du matériau flexible et/ou compressible,
- le diaphragme (6) comprend des chambres d'air au moins dans la région de passage et/ou un espace d'air (10) est réalisé,
- un espace d'air (10) est réalisé au niveau du côté arrière de la saillie (9) qui est opposé à la surface en section transversale ouverte (7), dans lequel espace d'air la saillie (9) peut reculer au moins partiellement.
